(19) Europäisches Patentamt
European Patent Office
Office européen des brevets

(11) Publication number: 0 076 551 B1

# (12) EUROPEAN PATENT SPECIFICATION

(45) Date of publication of patent specification: 29.01.86

(51) Int. Cl.[4]: C 01 F 11/46, C 04 B 11/02, C 04 B 11/06

(21) Application number: 82201229.0

(22) Date of filing: 01.10.82

## (54) Process for the preparation of calcium sulphate anhydrite.

(30) Priority: 02.10.81 NL 8104486

(43) Date of publication of application: 13.04.83 Bulletin 83/15

(45) Publication of the grant of the patent: 29.01.86 Bulletin 86/05

(84) Designated Contracting States: AT BE DE FR GB IT NL SE

(56) References cited:
FR-A- 846 975
FR-A-1 211 916
GB-A-1 328 357

(73) Proprietor: UNIE VAN KUNSTMESTFABRIEKEN B.V.
Maliebaan 81
NL-3581 CG Utrecht (NL)

(72) Inventor: Weterings, Cornelis Antonius M.
Schineksstraat 60
NL-6171 AP Stein (NL)

(74) Representative: Roeffen, Wilhelmus Johannes Maria et al
OCTROOIBUREAU DSM Postbus 9
NL-6160 MA Geleen (NL)

EP 0 076 551 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a process for the preparation of calcium sulphate anhydrite in which calcium sulphate dihydrate is recrystallized at elevated temperature in a liquid containing sulphuric acid, the calcium sulphate anhydrite formed is separated from the acid recrystallization liquid, and washed with water.

A process of this kind is known from the U.S. Patent Specification No. 2,531,977. In this process calcium sulphate dihydrate obtained in a phosphoric-acid preparation process is treated with sulphuric acid having a $H_2SO_4$ concentration of 15—33% by weight, at a temperature of between 60°C and the boiling point of the sulphuric-acid solution and in a residence time of more than 30 minutes, more in particular 2—3 hours. The calcium sulphate anhydrite formed is separated out and washed with water, and the remaining acid recrystallization liquid is returned to the phosphoric-acid preparation.

A disadvantage of this known process is that for the conversion of calcium sulphate dihydrate rather a substantial amount of sulphuric acid is needed, with uptake of water of crystallization, washing water and impurities (metals) resulting in the production of a large quantity of dilute and contaminated sulphuric-acid solution, which can hardly be put to any use outside the preparation of phosphoric acid. Concentrating such a sulphuric acid is fraught with difficulties because of the presence of the impurities, and, also, repeated use of such a sulphuric acid in a phosphoric-acid preparation process necessitates a cleaning operation in order to prevent accumulation of contaminants in the process.

It is already known to convert calcium sulphate dihydrate into calcium sulphate anhydrate at elevated temperature in a liquor containing sulphuric acid and an essential amount of calcium sulphate anhydrite seeding crystals, which liquor is prepared by conversion of a calcium compound a relatively low temperature with sulphuric acid (see FR—A—846.975) or by conversion of calcium sulphate dihydrate at relatively low temperature with sulphuric acid (see FR—A—1.211.916).

The invention provides a process enabling large quantities of calcium sulphate dihydrate to be converted into anhydrite with the help of a small quantity of sulphuric acid, in which process it is even possible to avoid captive production of dilute sulphuric acid altogether, whilst it is also possible in a simple way to remove the metal components from the dihydrate, and, if so desired, to recover them.

According to the invention this is achieved in that in a first step a quantity of calcium sulphate dihydrate is converted with concentrated sulphuric acid, after which quantities of freshly supplied calcium sulphate dihydrate are converted in a number of further steps, with the temperature and residence time in each step being higher, respectively longer, than in the preceding step, using as sulphuric-acid-containing liquid in each separate step the recrystallization liquid from the preceding step, after removal therefrom of calcium sulphate anhydrite.

By preference, the wash liquid obtained in the washing of the anhydrite is also supplied to the following recrystallization step. It is also possible, however, to subject the quantities of wash liquid obtained in the separate steps, optionally collectively, to a treatment for the removal of sulphate, phosphate and metal components, and to drain the resulting aqueous phase, or to supply at least part of it to the process.

It has been found possible thus to convert over 10 kg (e.g. 12—20 kg) calcium sulphate dihydrate into anhydrite with the help of 1 kg of concentrated sulphuric acid.

In the present process the recrystallization liquid used in the first step is a concentrated sulphuric acid with an $H_2SO_4$ content of, preferably, 55—70% by weight, related to the quantity of liquid phase in the recrystallization mixture. This recrystallization liquid can be obtained by feeding in a highly concentrated—say, 96—98% wt.—sulphuric acid, and returning to the first step part of the acid recrystallization liquid obtained in this first step after anhydrite removal. In general a temperature of 30—50°C and an average residence time of 5—20 minutes are then applied in this first step.

Subsequently, in each of a number of steps a new amount of dihydrate is converted into anhydrite with the help of the acid recrystallization liquid obtained in the preceding step, this recrystallization liquid becoming progressively more dilute from each step to the next, on account of it taking up crystal water and, possibly, wash water. The number of steps employed may vary, for instance from 3 to 10. In particular, the quantity of dihydrate to be converted and the number of steps are taken such that in the final step a recrystallization liquid with an $H_2SO_4$ concentration lower than 15% wt. results, with a temperature of 90—120°C and a residence time of 1.5—3 hours being applied in this final step.

It is further possible according to the invention largely to remove from the dilute acid liquid resulting from this final step after removal of anhydrite the sulphate, the phosphate and the metallic contaminants. To this end this liquid is advantageously treated with a calcium compound, the precipitate containing calcium sulphate, calcium phosphate and metals is separated out, and at least part of this precipitate is returned to the recrystallization. By preference the precipitate thus obtained is concentrated and the concentrated product is returned to the final recrystallization step. Various calcium compounds may be used for this treatment, for instance calcium oxide, or salts such as calcium carbonate, calcium sulphide, calcium nitrate or calcium chloride. Especially suitable are calcium oxide and calcium carbonate, because if these are used the anions are not left behind in the recrystallization liquid. In order to prevent accumulation of contaminants in the process this calcium addition is preferably effected in two steps, with the amount of calcium compound supplied to the first step being smaller than the amount equivalent to the quantity of

sulphate in the acid liquid, in particular such an amount that the pH of the liquid is brought to a value of about 1.5—3. The precipitate then formed contains, in addition to calcium sulphate and calcium phosphate, the greater part of the metals contained in the dihydrate. This precipitate is separated out, e.g. by filtration, and can, if so desired, be subjected to a further treatment of a known kind, for recovery of the metal components. Subsequently, such an amount of calcium compound is added to the liquid remaining after the first precipitation step that virtually all of the sulphate present is precipitated, with formation of a calcium sulphate dihydrate that is virtually free of phosphate and metals, which dihydrate is returned to the recrystallization. The aqueous phase remaining after the removal of the precipitate can be drained or be returned, at least in part, to the process as washing liquid for the several anhydrite washing treatments.

The calcium sulphate anhydrite resulting in the various steps is separated out, in particular by filtration, after which the filter cake is washed with water. The product consists virtually quantitatively of calcium sulphate anhydrite, and is suitable for instance for use in the production of building elements, as a setting retarder for cement, coating in the paper industry, filler in the paper, paint and plastics industries, and as a starting material for the preparation of technical-grade calcium compounds.

The calcium sulphate dihydrate used may be natural gypsum or a dihydrate obtained as a byproduct of chemical processes, in particular the decomposition of rock phosphate with mineral acids, such as nitric acid.

The invention will be elucidated with reference to the annexed figure, which illustrates one mode of realizing the invention in diagrammatic form.

Reactor A receives concentrated sulphuric acid through line 1, a recycled recrystallization liquid through line 7, and calcium sulphate dihydrate through line 2. Gaseous hydrogen fluoride issues through line 3, and an acid, anhydrite-containing liquid passes through line 4 to filter A', to which water is supplied through line 5. Through line 6 an acid filtrate is removed from A', part of which filtrate is returned to reactor A through line 7, the balance being sent through line 9 to reactor B, together with washing liquid supplied through line 8. Through line 10 an anhydrite filter cake is passed from A' to collecting tank G. To reactors B, C, D, E and F calcium dihydrate is supplied through lines 11, 19, 27, 35 and 43, and a recrystallization liquid containing sulphuric acid through lines 9, 17, 25, 33 and 41. The acid concentration in these reactors is determined by the quantity and the concentration of the recrystallization liquid supplied, the amount of washing water fed in, and the amount of dihydrate supplied. This last-mentioned amount may vary, but should, of course, be smaller than the maximum amount that can be suspended in the acid liquid. By varying the acid concentration, the residence time and the temperature, the particle size of the anhydrite obtained can be varied. Through line 75, reactor F also receives a recirculated calcium sulphate dihydrate precipitate. From these reactors gaseous hydrogen fluoride issues through lines 12, 20, 28, 36 and 44, and an acid, anydrite-containing liquid is discharged through lines 13, 21, 29, 37 and 45 to filters B', C', D', E' and F', respectively, to which water is supplied through lines 14, 22, 30, 38 and 46. From B', C', D', E' and F' an acid filtrate is discharged through lines 15, 23, 31, 39 and 47 and wash liquid is discharged through lines 16, 24, 32, 40 and 48, these flows being passed through line 17 to reactor C, through line 25 to reactor D, through line 33 to reactor E, through line 41 to reactor F, and through line 49 to precipitation vessel. Through lines 18, 26, 34, 42 and 50 an anhydrite filter cake is passed from these reactors to collecting tank G.

From G the aggregate filter cake is passed through line 51 to drier H, from which an anhydrite product is discharged through line 52.

Precipitation vessel I receives a liquid containing sulphuric acid through line 49, a recirculated acid filtrate through line 61 and calcium carbonate supplied by line 53 through line 54. Through line 55 gaseous $CO_2$ issues, which is discharged through line 67. Through line 56 wet precipitate is supplied to thickener J, from which thickener a quantity of liquid is returned through line 57 to vessel I, the thickened precipitate being passed through line 58 to filter J', to which water is supplied through line 59. From J' an acid filtrate is discharged through line 60 and a wash liquid through line 62, these discharge flows being collectively returned to precipitation vessel I through line 61. Through line 63 a filter cake containing sulphate, phosphate and metals is discharged to storage tank L. Optionally, this cake can be subjected to further treatment in equipment not shown here. From vessel I an acid liquid is passed through line 64 to precipitation vessel K, to which calcium carbonate is supplied through line 65 and from which $CO_2$ issues through line 66 to be discharged through line 67. From K a slurry is passed through line 68 to filter K', to which filter water is supplied through line 69. From K' a filtrate is discharged through line 70 and a wash liquid through line 71, which flows are collectively discharged through line 72. Through line 73 a wet calcium sulphate dihydrate filter cake is passed from K' to concentrating device M, e.g. an evaporator, a centrifuge, a hydrocyclone with a filter, from which water is discharged through line 74, the dried filter cake being returned to reactor F through line 75.

Example

In equipment as represented in the annexed figure reactor A received 1000 g 98-%-wt. $H_2SO_4$ through 1, 1579 g wet phosphogypsum (15% wt. adhering water) through 2, and 852 g recirculated liquid with an $H_2SO_4$ content of 65% wt. through 7. The composition of the phosphogypsum used is shown in Table I. The temperature in A was maintained at 45°C, the anhydrite content in the reactor was about 30% wt. and the $H_2SO_4$ concentration (related to the liquid phase) 65% wt. Through 3 an amount of 8 g HF issued. After a

residence time of 15 minutes, 3423 g of an anhydrite-containing acid liquid was passed through 4 to filter A', to which 526 g water was supplied through 5. Through 6, 1828 g filtrate ($H_2SO_4$ content 65% wt.) was discharged from A', 852 g of which was returned to A through 7, 976 g being passed, together with 724 g washing liquid ($H_2SO_4$ content 49.1% wt.) supplied through 8, to reactor B through 9. Through 10, 1397 g of an anhydrite filter cake was passed from A' to collecting tank G.

Through 9, 1700 g acid liquid ($H_2SO_4$ content 58.2% wt.) and, through 11, 1097 g wet phosphogypsum (15% wt. $H_2O$) were supplied to B. The temperature in B was kept at 60°C, the anhydrite content in the reactor was about 30% wt. and the $H_2SO_4$ concentration (related to the liquid phase) 46.7% wt. Through 12, an amount of 5 g HF issued. After a residence time of 30 minutes, 2792 g of an anhydrite-containing liquid was passed through 13 to filter B', to which 365 g water was supplied through 14. Through 15, 1730 g filtrate ($H_2SO_4$ content 46.7 wt.) and, through 16, 456 g washing liquid ($H_2SO_4$ content 34.2% wt.) were discharged from B', which flows were together passed, through 17, to reactor C. Through 18, 971 g of an anhydrite filter cake was passed from B' to collecting tank G.

Through 17, 2186 g acid liquid ($H_2SO_4$ content 44.1% wt.) and, through 19, 1672 g wet phosphogypsum (15% wt. $H_2O$) were supplied to C. The temperature in C was kept at 75°C, the anhydrite content in the reactor was about 33% wt., and the $H_2SO_4$ concentration (related to the liquid phase) was 34.6% wt. Through 20, an amount of 8 g HF issued. After a residence time of 45 minutes, 3850 g of an anhydrite-containing liquid was passed through 21 to filter C', to which 541 g water was supplied through 22. Through 23, 2320 g filtrate ($H_2SO_4$ content 34.6% wt.) and, through 24, 635 g wash liquid ($H_2SO_4$ content 24.7% wt.) were discharged from C', which flows were together passed to reactor D through 25. Through 26, 1436 g of an anhydrite filter cake was passed to collecting tank G.

Through 25, 2955 g acid liquid ($H_2SO_4$ content (32.4% wt.) and, through 27, 2396 g wet phosphogypsum (15% wt. $H_2O$) were supplied to D. The temperature in D was kept at 90°C, the anhydrite content in the reactor was about 35% wt. and the $H_2SO_4$ concentration (related to the liquid phase) was 25.5% wt. Through 28, an amount of 12 g HF issued. After a residence time of 60 minutes, 5351 g of an anhydrite-containing liquid was passed, through 29, to filter D', to which 799 g water was supplied through 30. Through 31, 3136 g filtrate ($H_2SO_4$ content 25.5% wt.) and, through 32, 893 g wash liquid ($H_2SO_4$ content 18.1% wt.) were discharged from D', which flows were together passed to reactor E through 33. Through 34, 2121 g of an anhydrite filter cake was passed to collecting tank G.

Through 33, 4029 g acid liquid ($H_2SO_4$ content 23.8% wt.) and, through 35, 4045 g wet phosphogypsum (15% wt. $H_2O$) were supplied to E. The temperature in E was maintained at 95°C, the anhydrite content in E was about 40% wt. and the $H_2SO_4$ concentration (related to the liquid phase) was 17.8%. Through 36 an amount of 20 g HF issued. After a residence time of 1.5 hours, 8074 g of an anhydrite-containing liquid was passed through 37 to filter E', to which 1350 g water was supplied through 38. Through 39, 4380 g filtrate ($H_2SO_4$ content 17.8% wt.) and, through 40, 1463 g wash liquid ($H_2SO_4$ content 12.3% wt.) were discharged from E', which flows were together passed to reactor F through 41. Through 42, 3581 g of an anhydrite filter cake was passed to collecting tank G.

Through 41, 5843 g acid liquid ($H_2SO_4$ content 16.4% wt.), through 43, 4101 g wet phosphogypsum (15% wt. $H_2O$), and, through 75, 1765 g of a recycled calcium sulphate dihydrate (15% wt. $H_2O$) were supplied to F. The temperature in F was kept at 100°C, the anhydrite content in the reactor was about 40% wt. and the $H_2SO_4$ concentration (related to the liquid phase) was 12.2% wt. Through 44 an amount of 20 g HF issued. After a residence time of 2 hours, 11709 g of an anhydrite-containing liquid was passed through 45 to filter F', to which 1957 g water was supplied through 46. Through 47, 6392 g filtrate ($H_2SO_4$ content 12.2% wt.) and, through 48, 2081 g wash liquid ($H_2SO_4$ content 8.3% wt.) were discharged from F', which flows were together passed to precipitation vessel I through 49. Through 50, 5193 g of an anhydrite filter cake was passed to collecting tank G.

Through 51, 14,669 g wet anhydrite having a water content of about 25% wt. was passed from G to drier H, from which drier about 11,000 g anhydrite product was discharged through 52. The composition of this product is shown in Table I.

Through 49, 8473 g acid liquid ($H_2SO_4$ content 11.2% wt.) and, through 61, 730 g of recycled filtrate were supplied to I. Through 53, 1000 g of a calcium carbonate product ($CaCO_3$ content 96.8% wt.) was supplied, of which, through 54, so much was fed into I (about 900 g) that the pH of the mixture in I was 2. The temperature in I was kept at 50°C. Through 55, gaseous $CO_2$ issued from I, and this was vented through 67. Through 65, a slurry was passed to thickener J, from which 1100 g of thickened slurry was passed to filter J' through 58, whilst the expelled liquid was returned to I through 57. Through 59, 398 g water was supplied to J', whilst, through 60, 297 g filtrate and, through 62, 433 g wash liquid were discharged, which flows were together returned to I through 61. Through 63, 768 g wet filter cake (30% wt. $H_2O$) was discharged to storage tank L. The composition of this filter cake is also shown in Table I.

An acid liquid was passed from I through 64 to K, which further received, through 65, about 100 g of the calcium carbonate product supplied through 53. The pH of the mixture obtained in K was 8; the temperature was kept at 50°C. Through 66, gaseous $CO_2$ issued from K, which $CO_2$ was vented, together with the $CO_2$ issuing from I, through 67 (about 300 g $CO_2$). Through 68, 8803 g slurry was passed to filter K', to which 1110 g water was supplied through 69. Through 70, 6564 g filtrate and, through 71, 1206 g wash liquid were discharged which flows were collectively (7770 g) drained through 72. Through 73, 2143 g of a wet calcium sulphate dihydrate filter cake (about 30% wt. adhering water) was passed from K' to centrifuge

M, from which 378 g water issued through 74, whilst, through 75, 1765 g calcium sulphate dihydrate (water content 15% wt.) was returned to F.

The quantities of reactants used in the above examples and the quantities of the products obtained therefrom can be summarily represented in the following gross reaction equations:

14890 g gypsum+1000 g $H_2SO_4$+1000 g $CaCO_3$+7046 g washing water→
(15% wt. $H_2O$) (98%) (96.8%)

14669 g anhydrite+73 g HF+768 g precipitate
(25% wt. $H_2O$) (30% $H_2O$)

+7770 g waste water+300 g $CO_2$↑ +378 g $H_2O$↑

After elimination of water and $CO_2$, the following gross reaction equation remains:

12657 g gypsum+1000 g $H_2SO_4$+1000 g $CaO_3$ 11000 g anhydrite+538 g precipitate+73 g HF.

The composition of the phosphogypsum used was determined as well as that of the anhydrite produced and the metallic precipitate formed. The results thus obtained are summarized in Table I below.

TABLE I

| | Phosphogypsum | Anhydrite | Metallic precipitate | |
|---|---|---|---|---|
| $CaSO_4 . 2H_2O$ | 96.5 % wt. | — | 31 % wt. | |
| $CaSO_4$ | 77.2 % wt. | 98.8 % wt. | — | |
| Crystal water | 19.3 % wt. | — | — | |
| $PO_4$ | 1.2 % wt. | 0.02 % wt. | 28 % wt. | |
| F | 0.8 % wt. | 0.05 % wt. | 4 % wt. | |
| Organic C | 0.2 % wt. | 0.05 % wt. | 1 % wt. | |
| $SiO_2$ | 0.9 % wt. | 0.8 % wt. | 5 % wt. | |
| Al | 0.1 % wt. | 80 ppm | | |
| Fe | 0.02 % wt. | 140 ppm | | |
| Na | 0.1 % wt. | 100 ppm | | |
| Sr | 0.1 % wt. | 800 ppm | | |
| K | 200 ppm* | 20 ppm | | 6% wt. |
| Y | 100 ppm* | 20 ppm | 0.18 % wt. | |
| Rare earths | 150 ppm* | 50 ppm | 0.25 % wt. | |
| U, As, Cd, Zn, Cu, Pb, Ni, Cr, Sn, V, Zr | 150 ppm* | 90 ppm | | |
| | | | 14% wt. bound Ca<br>11% wt. $CaCO_3$+<br>crystal water | |

* ppm: parts by weight per million.

These analytic results clearly show that the resulting anhydrite has a much lower contaminants content, especially as regards metallic components, than the phosphogypsum used. In addition, a

by-product precipitate is obtained which has a high concentration of (valuable) metals, which may optionally be recovered.

## Claims

1. Process for the preparation of calcium sulphate anhydrite in which a quantity of calcium sulphate dihydrate is recrystallized at elevated temperature in a liquid containing sulphuric acid, after which a further quantity of calcium sulphate dihydrate is recrystallized in said liquid, and the calcium sulphate finally formed is separated from the acid recrystallization liquid, and washed with water, this process being characterized in that in a first step a quantity of calcium sulphate dihydrate is converted with concentrated sulphuric acid, after which quantities of freshly supplied calcium sulphate dihydrate are converted in a number of further steps, with the temperature and residence time in each step being higher, respectively longer, than in the preceding step, using as sulphuric-acid-containing liquid in each separate step the crystallization liquid from the preceding step, after removal therefrom of calcium sulphate anhydrite.

2. Process according to claim 1, characterized in that in the first step the recrystallization is effected in an acid liquid obtained by adding 96—98% wt. sulphuric acid to a recycled portion of the recrystallization liquid obtained in this first step after removal of the calcium sulphate anhydrite.

3. Process according to claim 1 or 2, characterized in that the recrystallization in the first step is carried out at a temperature of 30—50°C, in a residence time of 5—20 minutes, and with an acid concentration of 55—70% wt., calculated as $H_2SO_4$ in relation to the weight of the liquid phase.

4. Process according to any one of the claims 1—3, characterized in that at least part of the wash liquid obtained in the washing of the anhydrite from the preceding step is incorporated in the recrystallization liquid.

5. Process according to any one of the claims 1—4, characterized in that the recrystallization in the final step is carried out at a temperature of 90—120°C, in a residence time of 1.5—3 hours, and with an acid concentration lower than 15% wt., calculated as $H_2SO_4$ in relation to the weight of the liquid phase.

6. Process according to any one of the claims 1—5, characterized in that the metals, sulphate and phosphate contained in the dilute acid liquid from the final recrystallization step are substantially removed therefrom.

7. Process according to claim 6, characterized in that a calcium compound is added to the acid liquid, the resulting precipitate is separated out, and at least part of this precipitate is returned to the recrystallization.

8. Process according to any one of the claims 1—7, characterized in that the acid liquid resulting from the final recrystallization step is first treated with a calcium compound in a quantity deficient in relation to the sulphate content, the resulting precipitate, which contains metals, calcium phosphate and calcium sulphate, is separated out, and next, by further addition of a calcium compound to the liquid remaining after the first precipitation step, the sulphate present is precipitated as a calcium sulphate dihydrate substantially free of phosphate and metals.

9. Process according to any one of the claims 1—8, characterized in that the precipitated calcium sulphate dihydrate is concentrated and returned to the final step.

## Patentansprüche

1. Verfahren zur Herstellung von Kalziumsulfat-Anhydrit, wobei eine Menge an Kalziumsulfat-Dihydrat bei erhöhter Temperatur in einer Schwefelsäure enthaltenden Flüssigkeit umkristallisiert wird, wonach eine weitere Menge an Kalziumsulfat-Dihydrat in der genannten Flüssigkeit umkristallisiert und das schließlich gebildete Kalziumsulfat von der sauren Umkristallisationsflüssigkeit abgetrennt und mit Wasser gewaschen wird, dadurch gekennzeichnet, daß in einer ersten Stufe Kalziumsulfat-Dihydrat mit konzentrierter Schwefelsäure umgewandelt wird, wonach Mengen von frisch zugeführtem Kalziumsulfat-Dihydrat in einer Anzahl von weiteren Stufen umgewandelt werden, wobei die Temperatur und die Verweilzeit in jeder Stufe höher bzw. länger ist als in der vorhergehenden Stufe und in jeder separaten Stufe die Kristallisationsflüssigkeit von der vorhergehenden Stufe als Schwefelsäure enthaltende Flüssigkeit nach der Entfernung von Kalziumsulfat-Anhydrit aus dieser verwendet wird.

2. Verfahren nach Anspruch 1, dadurch gekennzeichnet, daß in der ersten Stufe die Umkristallisation in einer sauren Flüssigkeit, erhalten durch Zusatz von 96—98 massen-proz. Schwefelsäure zu einem rückgeführten Anteil der in der ersten Stufe nach der Entfernung des Kalziumsulfat-Anhydrits erhaltenen Umkristallisationsflüssigkeit, durchgeführt wird.

3. Verfahren nach Anspruch 1 oder 2, dadurch gekennzeichnet, daß die Umkristallisation in der ersten Stufe bei einer Temperatur von 30—50°C, einer Verweilzeit von 5—20 min und mit einer Säurekonzentration von 55—70 Massen-%, berechnet als $H_2SO_4$ in bezug auf die Masse der flüssigen Phase, durchgeführt wird.

4. Verfahren nach einem der Ansprüche 1—3, dadurch gekennzeichnet, daß wenigstens ein Teil der beim Waschen des Anhydrits aus der vorhergehenden Stufe erhaltenen Waschflüssigkeit der Umkristallisationsflüssigkeit zugesetzt wird.

5. Verfahren nach einem der Ansprüche 1—4, dadurch gekennzeichnet, daß die Umkristallisation in der

letzten Stufe bei einer Temperatur von 90—120°C, einer Verweilzeit von 1,5—3 h und einer Säurekonzentration von weniger als 15 Massen-%, berechnet als $H_2SO_4$ bezogen auf die Masse der flüssigen Phase, durchgeführt wird.

6. Verfahren nach einem der Ansprüche 1—5, dadurch gekennzeichnet, daß die Metalle, das Sulfat und das Phosphat, die in der verdünnten sauren Flüssigkeit aus der letzten Umkristallisationsstufe enthalten sind, im wesentlichen daraus entfernt werden.

7. Verfahren nach Anspruch 6, dadurch gekennzeichnet, daß der sauren Flüssigkeit eine Kalziumverbindung zugesetzt, die resultierende Fällung abgetrennt und wenigstens ein Teil dieser Fällung zur Umkristallisation rückgeführt wird.

8. Verfahren nach einem der Ansprüche 1—7, dadurch gekennzeichnet, daß die aus der letzten Umkristallisationsstufe resultierende saure Flüssigkeit zuerst mit einer Kalziumverbindung im Unterschuß in bezug auf den Sulfatgehalt behandelt, die resultierende, Metalle, Kalziumphosphat und Kalziumsulfat enthaltende Fällung abgetrennt und sodann, durch weiteren Zusatz einer Kalziumverbindung zu der nach der ersten Kristallisationsstufe verbleibenden Flüssigkeit, das zugegene Kalziumsulfat als im wesentlichen von Phosphat und Metallen freies Kalziumsulfat-Dihydrat ausgefällt wird.

9. Verfahren nach einem der Ansprüche 1—8, dadurch gekennzeichnet, daß das ausgefällte Kalziumsulfat-Dihydrat konzentriert und zur letzten Stufe rückgeführt wird.

**Revendications**

1. Procédé pour la préparation de sulfate de calcium anhydrite dans lequel une quantité de sulfate de calcium dihydraté est recristallisée à une température élevée dans un liquide contenant de l'acide sulfurique, après quoi une quantité supplémentaire de sulfate de calcium dihydraté est recristallisée dans le dit liquide et le sulfate de calcium finalement formé est séparée du liquide de recristallisation acide et lavé à l'eau, ce procédé étant caractérisé en ce que l'on transforme, dans une première étape, une quantité de sulfate de calcium dihydraté avec de l'acide sulfurique concentré, après quoi on transforme des quantités fraîchement chargées de sulfate de calcium dihydraté dans un certain nombre d'étapes ultérieures, la température et le temps de séjour étant respectivement plus élevée et plus long que dans l'étape précédente, en utilisant comme liquide contenant de l'acide sulfurique dans chaque étape séparée le liquide de recristallisation provenant de l'étape précédente, après en avoir retiré le sulfate de calcium anhydrite.

2. Procédé selon la revendication 1, caractérisé en ce que, dans la première étape, on effectue la recristallisation dans un liquide acide obtenu en ajoutant de l'acide sulfurique à 96—98% en poids à une partie recyclée du liquide de recristallisation obtenu dans cette première étape, après en avoir retiré le sulfate de calcium anhydrite.

3. Procédé selon la revendication 1 ou 2, caractérisé en ce que la recristallisation de la première étape est réalisée à une température de 30—50°C, avec un temps de séjour de 5—20 minutes et une concentration en acide de 55—70% en poids, calculée en $H_2SO_4$ relativement au poids de la phase liquide.

4. Procédé selon l'une quelconque des revendications 1 à 3, caractérisé en ce qu'au moins une partie du liquide de lavage obtenu dans le lavage de l'anhydrite provenant de l'étape précédente est incorporée au liquide de recristallisation.

5. Procédé selon l'une quelconque des revendications 1 à 4, caractérisé en ce que la recristallisation de l'étape finale est réalisée à une température de 90—120°C, avec un temps de séjour de 1,5—3 heures et une concentration en acide inférieure à 15% en poids, calculée en $H_2SO_4$ relativement au poids de la phase liquide.

6. Procédé selon l'une quelconque des revendications 1 à 5, caractérisé en ce que les métaux, le sulfate et le phosphate contenus dans le liquide acide dilué provenant de l'étape de recristallisation finale en sont pratiquement éliminés.

7. Procédé selon la revendication 6, caractérisé en ce que l'on ajoute au liquide acide un composé de calcium, on séparé le précipité formé et on recycle vers la recristallisation au moins une partie de ce précipité.

8. Procédé selon l'une quelconque des revendications 1 à 7, caractérisé en ce que l'on traite d'abord le liquide acide obtenu dans l'étape de recristallisation finale avec un composé de calcium en quantité en défaut par rapport à la teneur en sulfate, on sépare le précipité formé, qui contient des métaux, du phosphate de calcium et du sulfate de calcium, puis, par addition supplémentaire d'un composé de calcium au liquide restant après la première étape de précipitation, on précipite le sulfate présent sous forme de sulfate de calcium dihydraté pratiquement exempt de phosphate et de métaux.

9. Procédé selon l'une quelconque des revendications 1 à 8, caractérisé en ce que le sulfate de calcium dihydraté précipité est concentré et renvoyé vers l'étape finale.

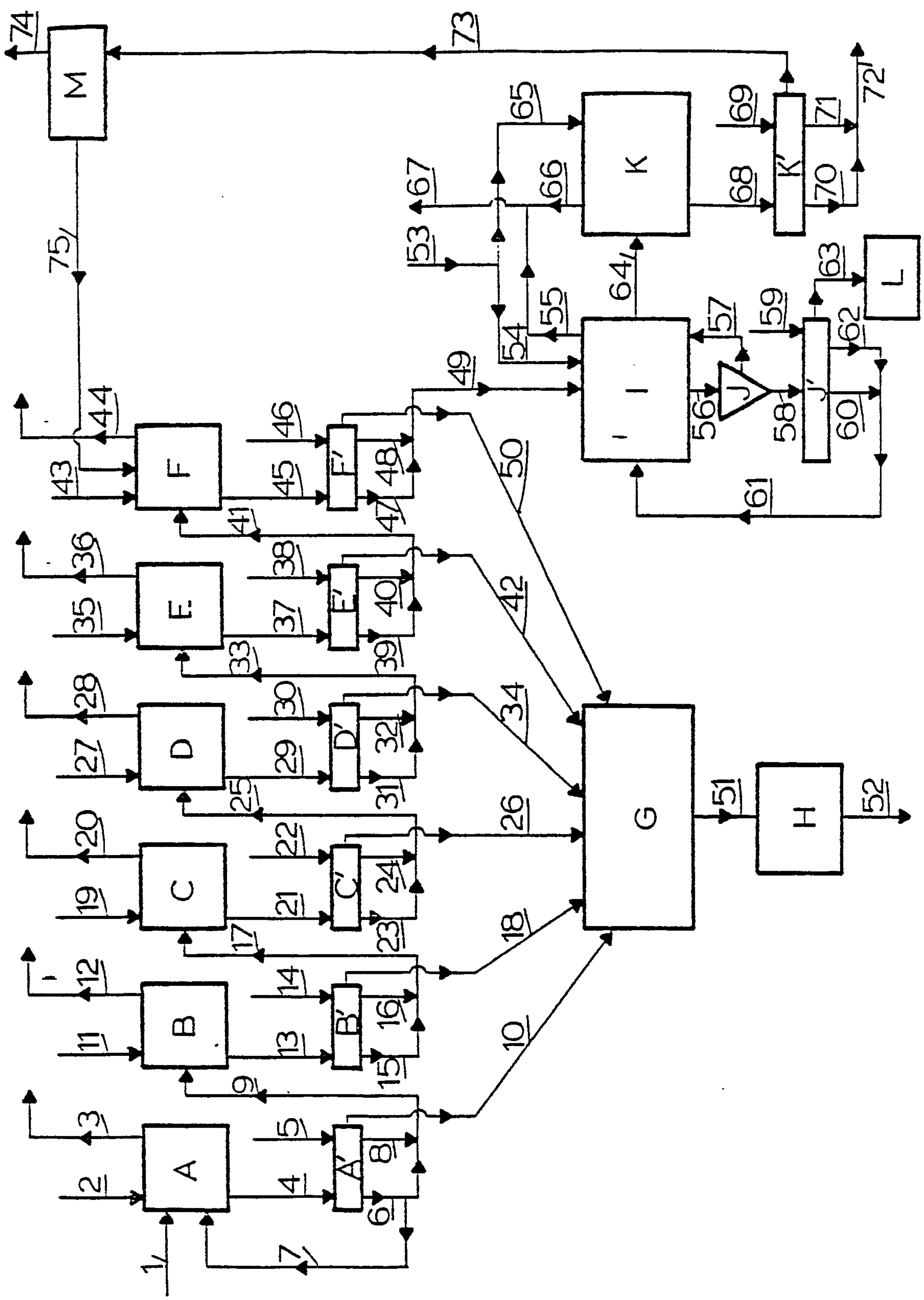

A
A'
B
B'
C
C'
D
D'
E
E'
F
F'
G
H
I
J
J'
K
K'
L
M
1
2
3
4
5
6
7
8
9
10
11
12
13
14
15
16
17
18
19
20
21
22
23
24
25
26
27
28
29
30
31
32
33
34
35
36
37
38
39
40
41
42
43
44
45
46
47
48
49
50
51
52
53
54
55
56
57
58
59
60
61
62
63
64
65
66
67
68
69
70
71
72
73
74
75